# EUROPEAN PATENT APPLICATION

(11) **EP 2 960 473 A1**
(43) Date of publication of application: **30.12.2015**
(21) Application number: 15179477.3
(22) Date of filing: 23.08.2012
(51) Int. Cl.: F02D 41/14, F02D 21/08, F02D 23/00, F02M 25/07, F02D 35/02

(54) **ENGINE SYSTEM CONTROL RESPONSIVE TO OXYGEN CONCENTRATION ESTIMATED FROM ENGINE CYLINDER PRESSURE**

(30) Priority: 31.08.2011 US 201161529512 P
(62) Divisional of application: 12828721.6
(71) Applicant: BorgWarner Inc., Auburn Hills, MI 48326 (US)
(72) Inventor: SHUTTY, John, Clarkston,, MI Michigan 48346 (US); WENZEL, Wolfgang, 70327 Stuttgart (DE)
(74) Representative: Hoefer & Partner Patentanwälte mbB

(57) **Abstract**

Method comprising the steps of:
determining an oxygen concentration deviation between an oxygen concentration setpoint and an estimated oxygen concentration that is estimated from actual cylinder pressure;
determining a boost pressure deviation between a boost pressure setpoint and an actual boost pressure;
producing a boost pressure control output in response to the boost pressure deviation; and
producing an oxygen concentration control output in response to the oxygen concentration deviation and the boost pressure control output.

## Description

### CROSS-REFERENCE TO RELATED APPLICATIONS

This application claims the benefit of United States Provisional Application No. 61/529,512 filed August 31, 2011.

### TECHNICAL FIELD

The field to which the disclosure generally relates includes engine system monitoring and control.

### BACKGROUND

An internal combustion engine system may include an engine with cylinders defining combustion chambers in which gases and fuel are combusted for conversion into mechanical power. The system also may include an air induction system for conveying induction gases to the cylinders, and an exhaust system for conveying exhaust gases away from the cylinders. The system further may include various system sensors in communication with one or more controllers to adjust engine fueling, aspirating, and ignition timing to optimize engine performance in terms of fuel consumption, exhaust gas emissions, and output power.

### SUMMARY OF EXEMPLARY EMBODIMENTS OF THE INVENTION

One embodiment of a method includes sensing pressure within a cylinder of an engine in an engine system, and estimating oxygen concentration in the engine system responsive to the sensed pressure within the cylinder.

Another embodiment of a method includes determining a boost pressure deviation between a boost pressure setpoint and an actual boost pressure, and determining an oxygen concentration deviation between an oxygen concentration setpoint and an estimated oxygen concentration that is estimated from actual cylinder pressure. The method also includes producing an oxygen concentration control output in response to the oxygen concentration deviation, and producing a boost control output in response to the boost pressure deviation and the oxygen concentration control output.

A further embodiment of a method includes determining an oxygen concentration deviation between an oxygen concentration setpoint and an estimated oxygen concentration that is estimated from actual cylinder pressure, and determining a boost pressure deviation between a boost pressure setpoint and an actual boost pressure. The method also includes producing a boost pressure control output in response to the boost pressure deviation, and producing an oxygen concentration control output in response to the oxygen concentration deviation and the boost pressure control output.

Also disclosed are various embodiments of products and computer program products to implement one or more of the method embodiments above.

Other exemplary embodiments of the present invention will become apparent from the detailed description provided hereinafter. It should be understood that the detailed description and specific examples, while disclosing exemplary embodiments of the invention, are intended for purposes of illustration only and are not intended to limit the scope of the invention.

### BRIEF DESCRIPTION OF THE DRAWINGS

Exemplary embodiments of the present invention will become more fully understood from the detailed description and the accompanying drawings, wherein:
Fig. 1 illustrates a schematic of an embodiment of an internal combustion engine system with a multitude of sensors;
Fig. 2 illustrates a schematic of an embodiment of a control scheme for the internal combustion engine system of Fig. 1;
Fig. 3 illustrates a schematic of another embodiment of a control scheme for the internal combustion engine system of Fig. 1; and
Fig. 4 illustrates a schematic of an additional embodiment of a control scheme for the internal combustion engine system of Fig. 1.

### DETAILED DESCRIPTION OF EXEMPLARY EMBODIMENTS

The following description of the embodiments is merely exemplary in nature and is in no way intended to limit the invention, its application, or uses.

Disclosed are various embodiments of methods of engine system control responsive to oxygen concentration estimated from engine cylinder pressure. For example, an embodiment of a method includes sensing pressure within a cylinder of an engine in an engine system, and estimating oxygen concentration in the engine system responsive to the sensed pressure within the cylinder.

Another embodiment of a method includes determining a boost pressure deviation between a boost pressure setpoint and an actual boost pressure, and determining an oxygen concentration deviation between an oxygen concentration setpoint and an estimated oxygen concentration that is estimated from actual cylinder pressure. The method also includes producing an oxygen concentration control output in response to the oxygen concentration deviation, and producing a boost control output in response to the boost pressure deviation and the oxygen concentration control output. The oxygen concentration control output may be used to adjust an engine system device, for example, a turbocharger variable turbine geometry actuator, a turbocharger EGR bypass valve, and/or the like.

A further embodiment of a method includes determining an oxygen concentration deviation between an oxygen concentration setpoint and an estimated oxygen concentration that is estimated from actual cylinder pressure, and determining a boost pressure deviation between a boost pressure setpoint and an actual boost pressure. The method also includes producing a boost pressure control output in response to the boost pressure deviation, and producing an oxygen concentration control output in response to the oxygen concentration deviation and the boost pressure control output. The oxygen concentration control output may be used to adjust an engine system device, for example, an exhaust gas recirculation valve, throttle valve, and/or the like.

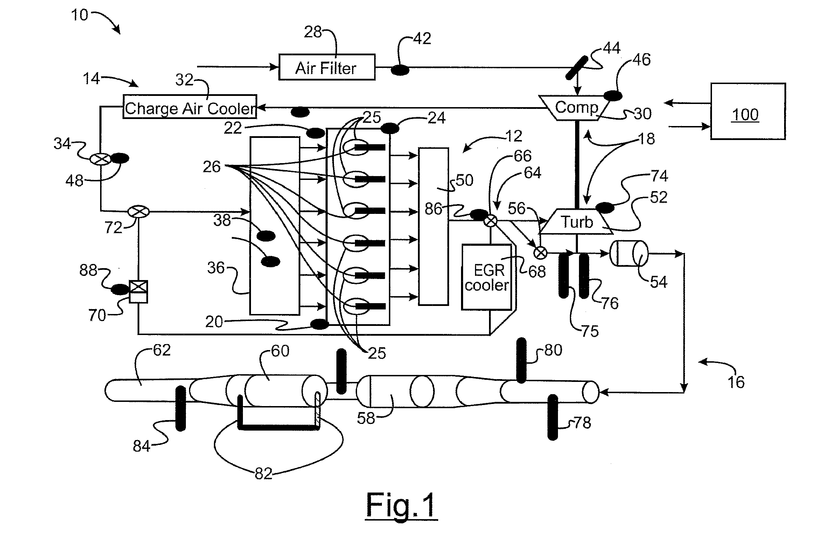

Referring now to Fig. 1, the methods may be used in conjunction with an internal combustion engine system 10. In general, the system 10 includes an internal combustion engine 12 to develop mechanical power from combustion of a mixture of air and fuel, an intake or aspiration system 14 to provide air to the engine 12, and an exhaust system 16 to convey combustion gases generally away from the engine 12. Also, the system 10 may include a turbocharger 18 in communication across the aspiration and exhaust systems 14, 16 to compress air for combustion to increase engine output. The turbocharger 18 may be a variable geometry turbine type of turbocharger. Those skilled in the art will recognize that a fuel system (not shown) may be used to provide fuel to the engine, and that a control system 100 may include one or more suitable processors and memory (not separately shown) to carry out at least some portions of the methods disclosed herein.

The internal combustion engine 12 may be any suitable type of engine, such as an autoignition engine like a diesel engine, or a spark ignition engine like a gasoline engine. The internal combustion engine 12 may use any type of suitable liquid or gaseous fuel. The engine 12 includes cylinders 25 and pistons in a block (not separately shown) that, along with a cylinder head (not separately shown), define combustion chambers (not separately shown). The engine 12 also may include several sensors. For example, an oil pressure sensor 20 may be provided in the block to measure engine oil pressure, as well as an engine speed and/or position sensor 22 to measure the rotational speed and/or position of an engine crankshaft (not shown). Also, a coolant temperature sensor 24 in the block measures the temperature of engine coolant flowing therethrough.

Finally, the engine 12 may include a number of engine cylinder pressure sensors 26 in communication with the engine cylinders 25 to measure pressure therein. The pressure sensors 26 may be located in immediate communication with the engine cylinders 25, such as for estimating parameters related to the engine's combustion curve. The engine cylinder pressure sensors 26 may be separate devices or may be integrated into other devices, such as pressure-sensing glow-plugs (PSGs).

Also, the pressure sensors 26 may be located in upstream or downstream communication with the engine cylinders 25, such as for estimating parameters related to the engine's gas exchange pressure curve (e.g. during opening of intake and exhaust valves). For example, the pressure sensors 26 may be placed in upstream communication in any suitable location in the aspiration system 14, such as in communication with the intake manifold 36. In another example, the pressure sensors 26 may be placed in downstream communication in any suitable location in the exhaust system 16, such as in communication with the exhaust manifold 50.

Although the cylinder pressure sensors 26 may be used in accordance with the methods described herein, they typically may be used to enhance engine system control and/or diagnostics. For example, the cylinder pressure sensors 26 may enhance control of cylinder-to-cylinder timing and fueling to compensate for individual cylinder differences. The cylinder pressure sensors 26 also may be used to compensate for fuel octane and cetane differences, and they may be used to perform closed loop ignition control using advanced combustion techniques such as Homogeneous Charge Compression Ignition (HCCI). As will be described further herein below, the methods described herein take advantage of the existence of these cylinder pressure sensors 26 to estimate oxygen concentration in the intake manifold 36 and/or in the engine cylinders 25.

The aspiration system 14 may include, in addition to suitable conduit and connectors, an air filter 28 to filter incoming air, a turbocharger compressor 30 to compress the filtered air, an intercooler 32 to cool the compressed air, and a throttle valve 34 to throttle the flow of the cooled air. The aspiration system 14 also may include an intake manifold 36 to receive the throttled air and distribute it to the combustion chambers of the engine 12.

The aspiration system 14 also may include a number of sensors. For example, an intake manifold pressure sensor 38 may be provided in communication with the intake manifold 36 to measure the pressure of air flowing to the engine cylinders 25, and a temperature sensor 40 to measure the temperature of air flowing to the cylinders 25. A mass air flow sensor 42 and ambient temperature sensor 44 may be placed downstream of the air filter 28 and upstream of the turbocharger compressor 30. A speed sensor 46 may be suitably coupled to the turbocharger compressor 30 to measure the rotational speed thereof. A throttle position sensor 48, such as an integrated angular position sensor, may be used to measure the position of the throttle valve 34.

The exhaust system 16 may include, in addition to suitable conduit and connectors, an exhaust manifold 50 to collect exhaust gases from the combustion chambers of the engine 12 and convey them downstream to the rest of the exhaust system 16. The exhaust system 16 also may include a turbocharger turbine 52 in downstream communication with the exhaust manifold 50, a catalytic converter 54 such as a close-coupled diesel oxidation catalyst (DOC) device, and a turbo wastegate valve 56 to control bypass of exhaust gases around the turbocharger turbine 52 to the DOC unit. Also, the exhaust system 16 may include a nitrogen oxide (NOx) adsorber unit 58 upstream of a soot filter 60, which may be upstream of an exhaust tailpipe 62.

Additionally, the exhaust and/or aspiration system(s) 16, 14 may include an exhaust gas recirculation (EGR) apparatus 64 to recirculate exhaust gas from the exhaust manifold 50 of the engine 12 to the intake manifold 36 of the engine 12. The EGR apparatus 64 may include an EGR cooler bypass valve 66 in downstream communication with the exhaust manifold 50 to control recirculation of exhaust gases back to the intake manifold 36, an EGR cooler 68 downstream of the EGR cooler bypass valve 66 to cool EGR gases, and an EGR valve 70 to control flow of the EGR gases. The EGR apparatus 64 also may include an EGR mixing unit 72 in communication with the EGR valve 70 at a location downstream of the throttle valve 34 and upstream of the intake manifold 36 to mix EGR gases with the throttled air.

Also, as used herein, HP EGR may include a high pressure exhaust gas recirculation path between exhaust and induction subsystems upstream of a turbocharger turbine and downstream of a turbocharger compressor, and LP EGR may include a low pressure exhaust gas recirculation path between exhaust and induction subsystems downstream of the turbocharger turbine and upstream of the turbocharger compressor.

The exhaust system 16 may further include a number of sensors. A position sensor 74 may be disposed in proximity to the turbocharger 18 to measure the position of the variable geometry turbine, and a NOx sensor 75 may be placed downstream of the turbine 52. Temperature sensors 76, 78 may be placed upstream and downstream of the catalytic converter 54 to measure the temperature of exhaust gases at the inlet and outlet of the catalytic converter 54. An oxygen (O₂) sensor 80 may be placed upstream of the adsorber unit 58 to measure oxygen in the exhaust gases. One or more pressure sensors 82 may be placed across the soot filter 60 to measure the pressure drop thereacross. A tailpipe temperature sensor 84 may be placed just upstream of a tailpipe outlet to measure the temperature of the exhaust gases exiting the exhaust system 16. Finally, a position sensor 86 maybe used to measure the position of the EGR cooler bypass valve 66, and another position sensor 88 may be used to measure the position of the EGR valve 70.

In addition to the sensors shown and discussed herein, any other suitable sensors and their associated parameters may be encompassed by the presently disclosed methods. For example, the sensors could also include accelerator pedal sensors, vehicle speed sensors, powertrain speed sensors, filter sensors, flow sensors, vibration sensors, knock sensors, intake and exhaust pressure sensors, turbocharger speed and noise sensors, and/or the like. Moreover, other engine system parameters may be encompassed by the presently disclosed methods, including turbocharger efficiency, component fouling or balancing problems, filter loading, Diesel Particulate Filter (DPF) regeneration status, EGR rate, HP/LP EGR fraction or ratio, cylinder charge mal-distribution, and/or the like. In other words, any sensors may be used to sense any suitable physical parameters including electrical, mechanical, and/or chemical parameters. As used herein, the term sensor includes any suitable hardware and/or software used to sense any engine system parameter.

According to one embodiment, however, oxygen sensors may not be used in the intake manifold 36 or in the engine cylinders 25. Accordingly, the cost and complexity of using such sensors may be avoided.

The control system 100 may receive and process input from the various sensors in light of stored instructions and/or data, and transmit output signals to various actuators. The control system 100 may include, for example, an electrical circuit, an electronic circuit or chip, and/or a computer. In an illustrative computer embodiment, the control system 100 generally may include one or more processors, memory devices that may be coupled to the processor(s), and one or more interfaces coupling the processor(s) to one or more other devices. Although not shown, the processor(s) and other powered system devices may be supplied with electricity by a power supply, for example, one or more batteries, fuel cells, or the like.

The processor(s) may execute instructions that provide at least some of the functionality for the disclosed system 10 and methods. As used herein, the term instructions may include, for example, control logic, computer software and/or firmware, programmable instructions, or other suitable instructions. The processor may include, for example, one or more microprocessors, microcontrollers, application specific integrated circuits, programmable logic devices, field programmable gate arrays, and/or any other suitable type of electronic processing device(s).

Also, the memory device may be configured to provide storage for data received by or loaded to the engine system, and/or for processor-executable instructions. The data and/or instructions may be stored, for example, as look-up tables, formulas, algorithms, maps, models, and/or any other suitable format. The memory may include, for example, RAM, ROM, EPROM, and/or any other suitable type of storage article and/or device.

Further, the interfaces may include, for example, analog/digital or digital/analog converters, signal conditioners, amplifiers, filters, other electronic devices or software modules, and/or any other suitable interfaces. The interfaces may conform to, for example, RS-232, parallel, small computer system interface, universal serial bus, CAN, MOST, LIN, FlexRay, and/or any other suitable protocol(s). The interfaces may include circuits, software, firmware, or any other device to assist or enable the control system 100 in communicating with other devices.

The methods or parts thereof may be implemented in a computer program product including instructions carried on a computer readable medium for use by one or more processors to implement one or more of the method steps. The computer program product may include one or more software programs comprised of program instructions in source code, object code, executable code or other formats; one or more firmware programs; or hardware description language (HDL) files; and any program related data. The data may include data structures, look-up tables, or data in any other suitable format. The program instructions may include program modules, routines, programs, objects, components, and/or the like. The computer program may be executed on one processor or on multiple processors in communication with one another.

The program(s) can be embodied on computer readable media, which can include one or more storage devices, articles of manufacture, or the like. Illustrative computer readable media include computer system memory, e.g. RAM (random access memory), ROM (read only memory); semiconductor memory, e.g. EPROM (erasable, programmable ROM), EEPROM (electrically erasable, programmable ROM), flash memory; magnetic or optical disks or tapes; and/or the like. The computer readable medium also may include computer to computer connections, for example, when data is transferred or provided over a network or another communications connection (either wired, wireless, or a combination thereof). Any combination(s) of the above examples is also included within the scope of the computer-readable media. It is therefore to be understood that the method may be at least partially performed by any electronic articles and/or devices capable of executing instructions corresponding to one or more steps of the disclosed methods.

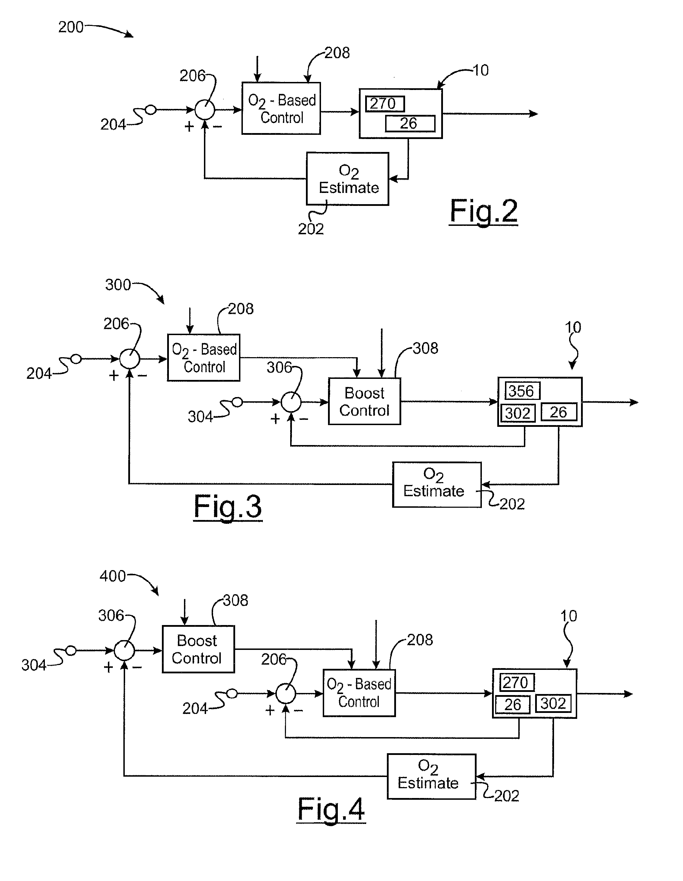

Fig. 2 illustrates an illustrative embodiment of a control architecture or system 200 that may be used wholly or partially to implement one or more engine control methods. This embodiment is similar in many respects to the embodiment of Fig. 1 and like numerals between the embodiments generally designate like or corresponding elements throughout the several views of the drawing figures. Additionally, the descriptions of the embodiments are incorporated by reference into one another and the common subject matter generally may not be repeated here.

The system 200 or method may include closed-loop control of any of one or more engine system devices, for example, one or more EGR valves 270. The system 200 also may include the engine 10 and the cylinder pressure sensors 26. The cylinder pressure sensor(s) 26 may produce one or more signals for use in producing an oxygen concentration estimate 202.

Oxygen concentration may have the most direct effect on good engine operation, and may have a significant effect on the shape of cylinder pressure during combustion. Thus, oxygen concentration may be estimated reliably from cylinder pressuring sensing. The oxygen concentration estimate 202 may be produced by a model, calculation, equation, formula, circuit, and/or any other suitable device, expedient, or the like.

Cylinder pressure may be correlated to oxygen concentration in any suitable manner. First, an engine system may be operated in an instrumented vehicle on a vehicle test track, on a dynamometer, in an emissions test laboratory, and/or the like. During engine system operation, cylinder pressure may be sensed using engine cylinder pressure sensors in communication with engine cylinders of an engine of the engine system. Then, oxygen concentration may be sensed using one or more oxygen sensors in the engine intake manifold and/or one or more engine cylinders. Values for any or all of the sensed parameters may be stored in any suitable manner for subsequent data analysis.

The various parameters may be analyzed or evaluated to correlate engine cylinder pressure to oxygen concentration in the engine system. Such correlation may be carried out in any suitable fashion. For example, cylinder pressure may be formulaically related to oxygen concentration. In another example, cylinder pressure may be empirically and statistically related to oxygen concentration. In any case, the correlation or relationship between cylinder pressure and oxygen concentration may be modeled formulaically, empirically, acoustically, and/or the like. For example, empirical models may be developed from suitable testing and can include lookup tables, maps, and the like that may cross reference cylinder pressure with oxygen concentration.

As used herein, the term "model" may include any construct that represents something using variables, such as a look up table, map, formula, algorithm and/or the like. Models may be application specific and particular to the exact design and performance specifications of any given engine system. In one example, the engine system models in turn may be responsive to engine speed and intake manifold pressure and temperature. The engine system models may be updated each time engine parameters change, and may be multi-dimensional look up tables using inputs including engine speed and engine intake gas density or oxygen concentration, which may be determined with the intake pressure, temperature, and universal gas constant.

In one example, the frequency content of the cylinder pressure sensor signals may be analyzed or evaluated to estimate the other engine system parameters. For example, the frequency spectrum of the cylinder pressure sensor signals or portions thereof may be analyzed to determine the oxygen concentration, for example, using Fourier analysis, Laplace analysis, Wavelet analysis, and/or the like. Also, such preprocessing may be coupled with, for example, model-based or artificial intelligence approaches like neural networks to evaluate relationships between sensed engine cylinder pressure and oxygen concentration.

Accordingly, engine cylinder pressure measurements are used as a proxy for and, thus, to replace or augment measurements of, oxygen concentration. Although cylinder pressure at any given moment during engine operation may be measured, one preferred aspect includes using non-combustion cylinder pressure measurements such as pre-combustion and/or post-combustion pressure. More particularly, engine cylinder pressure may be sensed just before combustion, but substantially when compression is complete.

The system 200 or method may include an oxygen concentration setpoint 204, an arithmetic node 206 to produce a deviation between the setpoint 204 and the oxygen concentration estimate 202, and an oxygen concentration based closed-loop controller 208 that may produce a closed-loop oxygen concentration setpoint in response to the deviation. The node 206 may perform any suitable arithmetic operation on the setpoint like summing, subtraction, superimposing, averaging, and/or any other suitable combination. The closed-loop controller 208 may produce as output a closed-loop command or setpoint for any suitable engine system device, for example, an actuator position command for an EGR valve 270. The closed-loop controller 208 may include one or more of a proportional controller, proportional-integral controller, proportional-derivative controller, proportional-integral-derivative controller, or any other suitable type of controller that may be separate, or integrated in one controller or on one processor in any suitable manner. As indicated by an arrow, the controller 208 may receive as additional input, one or more additional parameters of any suitable type.

In operation, pressure may be sensed within one or more of the cylinders 25 of the engine 12 of the engine system 10, oxygen concentration may be estimated in the engine system 10 responsive to the sensed pressure within the cylinder(s) 25, and the engine system 10 may be controlled responsive to the estimated oxygen concentration. More particularly, an oxygen concentration deviation may be determined between an oxygen concentration setpoint and an estimated oxygen concentration that is estimated from actual cylinder pressure. Then, an oxygen concentration control output may be produced in response to the oxygen concentration deviation, and that output may be used to control one or more engine system devices, for example, the EGR valve 270, an engine throttle valve, or the like. Accordingly, oxygen concentration in the intake manifold 36 and/or the engine cylinders 25 may be controlled in a tight and responsive manner.

The oxygen concentration may be an estimate from oxygen concentration in the engine cylinder and/or in an intake manifold of the engine system. Also, the oxygen concentration may be estimated by analyzing frequency of the sensed pressure and correlating the frequency with oxygen concentration.

Fig. 3 illustrates an illustrative embodiment of a boost control system 300 that may be used wholly or partially to implement one or more boost control methods. This embodiment is similar in many respects to the embodiment of Figs. 1 and 2 and like numerals between the embodiments generally designate like or corresponding elements throughout the several views of the drawing figures. Additionally, the descriptions of the embodiments are incorporated by reference into one another and the common subject matter generally may not be repeated here.

The system 300 or method may include closed-loop control of any suitable engine system device 356, for example, an actuator for a variable turbine geometry turbocharger, a turbocharger inlet valve, a turbocharger bypass or wastegate valve, or any other suitable device. The system 300 also may include the engine 10 and one or more turbocharger boost pressure sensors 302 and the cylinder pressure sensors 26 placed in any suitable location. The boost pressure sensor(s) 302 may produce one or more signals for actual boost pressure, and the cylinder pressure sensor(s) 26 may produce one or more signals for use in producing the oxygen concentration estimate 202.

The system 300 or method may include a boost pressure setpoint 304, an arithmetic node 306 to produce a deviation between the setpoint 304 and the actual boost pressure from the sensor(s) 302, and a boost pressure closed-loop controller 308 that may produce a closed-loop boost control setpoint in response to the boost pressure deviation. The node 306 may perform any suitable arithmetic operation on the setpoint and signal like summing, subtraction, superimposing, averaging, and/or any other suitable combination. The closed-loop controller 308 may produce as output a closed-loop command or setpoint, like an actuator position command for the boost control device 356. The closed-loop controller 308 may include a proportional controller, a proportional-integral controller, a proportional-derivative controller, a proportional-integral-derivative controller, or any other suitable type of controller that may be separate, or integrated in one controller or on one processor in any suitable manner. As indicated by the arrow, the controller 308 may receive as additional input, one or more additional parameters of any suitable type. Additionally, the controller 308 receives output from the oxygen concentration based controller 208.

In operation, a boost pressure deviation is determined between a boost pressure setpoint and an actual boost pressure, and an oxygen concentration deviation is determined between an oxygen concentration setpoint and an estimated oxygen concentration that is estimated from actual cylinder pressure. Then, an oxygen concentration control output is produced in response to the oxygen concentration deviation. Thereafter, a boost control output is produced in response to the boost pressure deviation and the oxygen concentration control output, and a boost control device is controlled in response to the boost control output.

Fig. 4 illustrates an illustrative embodiment of an oxygen concentration control system 400 that may be used wholly or partially to implement one or more boost control methods. This embodiment is similar in many respects to the embodiment of Figs. 1 through 3 and like numerals between the embodiments generally designate like or corresponding elements throughout the several views of the drawing figures. Additionally, the descriptions of the embodiments are incorporated by reference into one another and the common subject matter generally may not be repeated here.

The control system 400 may include the oxygen concentration controller 208 and the boost controller 308 of Fig. 3, wherein the boost controller 308 may be used as an input to the oxygen concentration controller 208 instead of the other way around. Accordingly, in operation, an oxygen concentration deviation is determined between an oxygen concentration setpoint and an estimated oxygen concentration that is estimated from actual cylinder pressure, and a boost pressure deviation is determined between a boost pressure setpoint and an actual boost pressure. Then, a boost pressure control output is produced in response to the boost pressure deviation. Thereafter, an oxygen concentration control output is produced in response to the oxygen concentration deviation and the boost pressure control output, and one or more engine system devices, for example, the EGR valve 270, a throttle valve, or the like, may be controlled in response to the oxygen concentration control output.

With one or more of the embodiments described herein, desired conditions may be achieved in an engine intake manifold and/or engine cylinders including desired gas composition (primarily oxygen concentration), gas temperature, gas pressure, and/or gas motion (controlled with one or more swirl valves or the like).

The following is a description of select embodiments within the scope of the invention. However, the invention is not limited to the specific embodiments described hereafter, and each embodiment may be used alone or in any combination with any other embodiment(s) or elements thereof.
Embodiment 1 of the invention may include a method including sensing pressure within a cylinder of an engine in an engine system, and estimating oxygen concentration in the engine system responsive to the sensed pressure within the cylinder.
Embodiment 2 of the invention may include a method as set forth in embodiment 1 and further comprising controlling oxygen concentration in at least one of an engine intake manifold or the engine cylinder in response to the estimated oxygen concentration.
Embodiment 3 of the invention may include a method as set forth in one or more of embodiments 1-2 wherein the estimating step includes at least one of estimating oxygen concentration in the engine cylinder or in an intake manifold of the engine system.
Embodiment 4 of the invention may include a method as set forth in one or more of embodiments 1-3 wherein the estimating step includes analyzing frequency of the sensed pressure and correlating the frequency with oxygen concentration.
Embodiment 5 of the invention may include a method as set forth in one or more of embodiments 1-4 wherein the controlling step includes adjusting at least one EGR valve.
Embodiment 6 of the invention may include a method as set forth in one or more of embodiments 1-5 wherein the controlling step includes adjusting a throttle valve.
Embodiment 7 of the invention may include a program product comprising a computer-readable medium including instructions executable by a computer-controlled engine system to cause the system to implement a method as set forth in one or more of embodiments 1-6.
Embodiment 8 of the invention may include a product including at least one engine cylinder pressure sensor to measure engine cylinder pressure, at least one memory device storing program instructions and data, and at least one control system coupled to the sensor and memory and responsive to the program instructions for causing the computer-controlled system to perform a method as set forth in one or more of embodiments 1-6.
Embodiment 9 of the invention may include a product as set forth in embodiment 8 wherein the at least one control system includes an oxygen concentration closed-loop controller.
Embodiment 10 of the invention may include a method including determining a boost pressure deviation between a boost pressure setpoint and an actual boost pressure, and determining an oxygen concentration deviation between an oxygen concentration setpoint and an estimated oxygen concentration that is estimated from actual cylinder pressure. According to this embodiment, the method also may include producing an oxygen concentration control output in response to the oxygen concentration deviation, and producing a boost control output in response to the boost pressure deviation and the oxygen concentration control output.
Embodiment 11 of the invention may include a method as set forth in embodiment 10 and further comprising controlling boost pressure responsive to the boost control output.
Embodiment 12 of the invention may include a method as set forth in one or more of embodiments 10-11 wherein the controlling step includes adjusting at least one of a variable turbine geometry actuator or an EGR bypass valve.
Embodiment 13 of the invention may include a method as set forth in one or more of embodiments 10-12 further comprising sensing pressure in an engine cylinder to provide the actual cylinder pressure, and sensing turbocharger boost pressure to provide the actual boost pressure.
Embodiment 14 of the invention may include a program product comprising a computer-readable medium including instructions executable by a computer-controlled engine system to cause the system to implement a method as set forth in one or more of embodiments 10-13.
Embodiment 15 of the invention may include a product including at least one engine cylinder pressure sensor to measure engine cylinder pressure, at least one turbocharger boost pressure sensor to measure turbocharger boost pressure, at least one memory device storing program instructions and data, and at least one control system coupled to the sensors and memory and responsive to the program instructions for causing the computer-controlled system to perform a method as set forth in one or more of embodiments 10-13.
Embodiment 16 of the invention may include a product as set forth in embodiment 15 wherein the at least one control system includes an oxygen concentration closed-loop controller, and a boost pressure closed-loop controller.
Embodiment 17 of the invention may include a method including determining an oxygen concentration deviation between an oxygen concentration setpoint and an estimated oxygen concentration that is estimated from actual cylinder pressure, and determining a boost pressure deviation between a boost pressure setpoint and an actual boost pressure. The method of embodiment 17 also may include producing a boost pressure control output in response to the boost pressure deviation, and producing an oxygen concentration control output in response to the oxygen concentration deviation and the boost pressure control output.
Embodiment 18 of the invention may include a method as set forth in embodiment 17 and further comprising controlling oxygen concentration in at least one of an engine intake manifold or an engine cylinder responsive to the oxygen concentration control output.
Embodiment 19 of the invention may include a method as set forth in one or more of embodiments 17-18 further comprising sensing pressure in an engine cylinder to provide the actual cylinder pressure, and sensing turbocharger boost pressure to provide the actual boost pressure.
Embodiment 20 of the invention may include a program product comprising a computer-readable medium including instructions executable by a computer-controlled engine system to cause the system to implement a method as set forth in one or more of embodiments 17-19.
Embodiment 21 of the invention may include a product including at least one engine cylinder pressure sensor to measure engine cylinder pressure, at least one turbocharger boost pressure sensor to measure turbocharger boost pressure, at least one memory device storing program instructions and data, and at least one control system coupled to the sensors and memory and responsive to the program instructions for causing the computer-controlled system to perform a method as set forth in one or more of embodiments 17-19.
Embodiment 22 of the invention may include a product as set forth in embodiment 21 wherein the at least one control system includes an oxygen concentration closed-loop controller, and a boost pressure closed-loop controller.

The above description of embodiments of the invention is merely exemplary in nature and, thus, variations thereof are not to be regarded as a departure from the spirit and scope of the invention.

The present invention can further be described by means of the following clauses:
1. A method comprising:
   sensing pressure within a cylinder of an engine in an engine system; and
   estimating oxygen concentration in the engine system responsive to the sensed pressure within the cylinder.
2. The method of clause 1, further comprising controlling oxygen concentration in at least one of an engine intake manifold or the engine cylinder in response to the estimated oxygen concentration.
3. The method of clause 1, wherein the estimating step includes at least one of estimating oxygen concentration in the engine cylinder or in an intake manifold of the engine system.
4. The method of clause 1, wherein the estimating step includes analyzing frequency of the sensed pressure and correlating the frequency with oxygen concentration.
5. The method of clause 1, wherein the controlling step includes adjusting at least one EGR valve.
6. The method of clause 1, wherein the controlling step includes adjusting a throttle valve.
7. A computer program product comprising a computer-readable medium including instructions executable by a computer-controlled engine system to cause the system to implement a method according to clause 1.
8. A product, comprising:
   at least one engine cylinder pressure sensor to measure engine cylinder pressure;
   at least one memory device storing program instructions and data; and
   at least one control system coupled to the sensor and memory and responsive to the program instructions for causing the computer-controlled system to perform a method according to clause 1.
9. The product of clause 8, wherein the at least one control system includes an oxygen concentration closed-loop controller.
10. A method comprising:
   determining a boost pressure deviation between a boost pressure setpoint and an actual boost pressure;
   determining an oxygen concentration deviation between an oxygen concentration setpoint and an estimated oxygen concentration that is estimated from actual cylinder pressure;
   producing an oxygen concentration control output in response to the oxygen concentration deviation; and
   producing a boost control output in response to the boost pressure deviation and the oxygen concentration control output.
11. The method of clause 10, further comprising:
   controlling boost pressure responsive to the boost control output.
12. The method of clause 11, wherein the controlling step includes adjusting at least one of a variable turbine geometry actuator or an EGR bypass valve.
13. The method of clause 10, further comprising:
   sensing pressure in an engine cylinder to provide the actual cylinder pressure; and
   sensing turbocharger boost pressure to provide the actual boost pressure.
14. A computer program product comprising a computer-readable medium including instructions executable by a computer-controlled engine system to cause the system to implement a method according to clause 10.
15. A product, comprising:
   at least one engine cylinder pressure sensor to measure engine cylinder pressure;
   at least one turbocharger boost pressure sensor to measure turbocharger boost pressure;
   at least one memory device storing program instructions and data; and
   at least one control system coupled to the sensors and memory and responsive to the program instructions for causing the computer-controlled system to perform a method according to clause 10.
16. The product of clause 15, wherein the at least one control system includes an oxygen concentration closed-loop controller, and a boost pressure closed-loop controller.
17. A method comprising:
   determining an oxygen concentration deviation between an oxygen concentration setpoint and an estimated oxygen concentration that is estimated from actual cylinder pressure;
   determining a boost pressure deviation between a boost pressure setpoint and an actual boost pressure;
   producing a boost pressure control output in response to the boost pressure deviation; and
   producing an oxygen concentration control output in response to the oxygen concentration deviation and the boost pressure control output.
18. The method of clause 17, further comprising:
   controlling oxygen concentration in at least one of an engine intake manifold or an engine cylinder responsive to the oxygen concentration control output.
19. The method of clause 17, further comprising:
   sensing pressure in an engine cylinder to provide the actual cylinder pressure; and
   sensing turbocharger boost pressure to provide the actual boost pressure.
20. A computer program product comprising a computer-readable medium including instructions executable by a computer-controlled engine system to cause the system to implement a method according to clause 17.
21. A product, comprising:
   at least one engine cylinder pressure sensor to measure engine cylinder pressure;
   at least one turbocharger boost pressure sensor to measure turbocharger boost pressure;
   at least one memory device storing program instructions and data; and
   at least one control system coupled to the sensors and memory and responsive to the program instructions for causing the computer-controlled system to perform a method according to clause 17.
22. The product of clause 21, wherein the at least one control system includes an oxygen concentration closed-loop controller, and a boost pressure closed-loop controller.

## Claims

1. A method comprising:
determining an oxygen concentration deviation between an oxygen concentration setpoint and an estimated oxygen concentration that is estimated from actual cylinder pressure;
determining a boost pressure deviation between a boost pressure setpoint and an actual boost pressure;
producing a boost pressure control output in response to the boost pressure deviation; and
producing an oxygen concentration control output in response to the oxygen concentration deviation and the boost pressure control output.

2. The method of claim 1, further comprising:
controlling oxygen concentration in at least one of an engine intake manifold or an engine cylinder responsive to the oxygen concentration control output.

3. The method of claim 1, further comprising:
sensing pressure in an engine cylinder to provide the actual cylinder pressure; and
sensing turbocharger boost pressure to provide the actual boost pressure.

4. A computer program product comprising a computer-readable medium including instructions executable by a computer-controlled engine system to cause the system to implement a method according to claim 1.

5. A product, comprising:
at least one engine cylinder pressure sensor to measure engine cylinder pressure;
at least one turbocharger boost pressure sensor to measure turbocharger boost pressure;
at least one memory device storing program instructions and data; and
at least one control system coupled to the sensors and memory and responsive to the program instructions for causing the computer-controlled system to perform a method according to claim 1.

6. The product of claim 5, wherein the at least one control system includes an oxygen concentration closed-loop controller, and a boost pressure closed-loop controller.
